# FASCICULE DE BREVET EUROPEEN

(11) **EP 1 628 378 B1**
(45) Date de publication et mention de la délivrance du brevet: **16.04.2014**
(21) Numéro de dépôt: 05356134.6
(22) Date de dépôt: 09.08.2005
(51) Int. Cl.: H02H 9/06, H01T 2/02

(54) **Dispositif de protection contre les surtensions a eclateurs en parallele**
Überspannungsschutzvorrichtung einschliesslich paralleler Funkenstrecken
Overvoltage protection device comprising parallel spark gaps

(30) Priorité: 13.08.2004 FR 0408873
(43) Date de publication de la demande: 22.02.2006
(73) Titulaire: ABB France, 91978 Courtaboeuf Cedex (FR)
(72) Inventeur: Crevenat, Vincent André Lucien, 65250 Izaux (FR); Gautier, Boris, 65100 Lourdes (FR)
(74) Mandataire: Hirsch & Associés

(56) Documents cités:
- DE-A1- 10 211 795
- DE-B- 1 009 709

## Description

La présente invention se rapporte au domaine technique général des dispositifs de protection d'installations ou d'équipements électriques contre les surtensions, et notamment les surtensions transitoires dues à un impact de foudre.

La présente invention concerne plus particulièrement un dispositif de protection d'une installation électrique contre les surtensions, notamment les surtensions transitoires dues à un impact de foudre, ledit dispositif étant monté en dérivation par rapport à l'installation électrique à protéger et pourvu d'un circuit électrique comprenant :
- au moins une première branche, comprenant un premier éclateur,
- au moins une deuxième branche, montée en parallèle avec ladite première branche et comprenant un deuxième éclateur, comportant au moins deux électrodes principales,
- des moyens de couplage de la première branche avec la deuxième branche.

Les dispositifs de protection d'installations électriques contre les surtensions, souvent désignés sous l'appellation « *parafoudres* », ont pour fonction essentielle d'écouler à la terre des courants de foudre, et également d'écrêter les tensions additionnelles générées par ces courants de foudre à des niveaux compatibles avec la tenue des équipements et appareils avec lesquels ils sont raccordés.

Parmi les types de dispositifs de protection connus, on distingue les dispositifs à éclateur. Dans ces dispositifs, l'éclateur est généralement raccordé entre la phase à protéger et la terre de manière à permettre, en cas de surtension, l'écoulement du courant de foudre à la terre.

Un éclateur est un dispositif couramment utilisé qui comprend généralement deux électrodes principales placées en vis-à-vis et séparées par un milieu isolant. Une première électrode est connectée à la phase à protéger, tandis que l'autre électrode est connectée à la terre. Lorsqu'une surtension, générée par exemple par l'arrivée d'un courant de foudre, atteint une valeur seuil dite de déclenchement, l'éclateur s'amorce et un arc électrique se forme entre les électrodes, permettant l'écoulement du courant de foudre de la phase vers la terre et préservant ainsi l'installation électrique.

Par ailleurs, tel que cela est décrit dans le document DE-102 11 795, il est possible d'adjoindre à l'éclateur d'écoulement du courant de foudre un circuit de pré-déclenchement séparé, comprenant par exemple un éclateur à gaz associé en série à un condensateur, ledit circuit de pré-déclenchement étant capable de délivrer une impulsion de tension à une électrode de pré-déclenchement disposée entre les électrodes principales afin de permettre l'amorçage anticipé d'un arc entre lesdites électrodes principales, et par conséquent l'écoulement du courant de foudre entre ces dernières.

L'arc électrique ne s'éteint pas spontanément et continue ainsi d'écouler un courant de court-circuit appelé courant de suite. Ce courant de suite doit de préférence être coupé sans provoquer l'ouverture des dispositifs de coupure générale de l'installation, tels que les disjoncteurs, de manière à éviter la mise hors tension de l'installation.

A cet effet, l'éclateur est généralement pourvu d'un dispositif de coupure de l'arc électrique qui caractérise le pouvoir de coupure intrinsèque de l'éclateur.

Les dispositifs de protection comportant un unique éclateur, bien qu'intéressants en raison de leur simplicité de mise en oeuvre, présentent cependant plusieurs inconvénients, liés notamment à leur capacité limitée d'écoulement du courant de foudre d'une part et de coupure du courant de suite d'autre part.

Pour pallier ces inconvénients, il est connu de monter plusieurs éclateurs en parallèle, afin de mieux répartir le courant de foudre et le courant de suite entre ces éclateurs, ce qui permet d'améliorer la capacité globale d'écoulement du courant de foudre et de coupure du courant de suite du dispositif de protection.

Les dispositifs de protection à éclateurs en parallèle connus fonctionnent généralement de la façon suivante.

Deux éclateurs sont montés en parallèle et en dérivation par rapport à l'installation électrique à protéger, et on dispose, en série avec chacun d'entre eux, une bobine d'inductance. Lorsqu'une surtension se produit, d'amplitude suffisante pour amorcer l'un des deux éclateurs, le courant s'écoulant à travers la bobine d'inductance disposée en série avec cet éclateur crée une tension aux bornes de la bobine, cette tension se retrouvant aux bornes du second éclateur ce qui provoque son amorçage.

De tels dispositifs, bien qu'offrant une meilleure protection que les dispositifs à éclateur unique, souffrent cependant de plusieurs inconvénients.

Tout d'abord, lorsque le courant traversant le premier éclateur a une intensité inférieure à une valeur prédéterminée, la tension générée aux bornes de la bobine d'inductance est insuffisante pour amorcer le second éclateur. Dans cette situation, il n'y a donc pas de répartition du courant entre les deux éclateurs, de telle sorte que la capacité d'écoulement du courant de foudre du dispositif correspond sensiblement à la capacité d'écoulement du courant de foudre du seul premier éclateur.

Un autre inconvénient de ces dispositifs provient du fait qu'il est difficile, voire impossible, de prévoir à l'avance lequel des éclateurs va se déclencher en premier, de telle sorte que le fonctionnement de ces dispositifs est aléatoire et mal maîtrisé, ce qui n'est pas souhaitable sur le plan de la sécurité.

Les objets assignés à l'invention visent en conséquence à porter remède aux différents inconvénients énumérés précédemment et à proposer un nouveau dispositif de protection contre les surtensions possédant une capacité d'écoulement du courant de foudre et de coupure du courant de suite améliorée.

Un autre objet de l'invention vise à proposer un nouveau dispositif de protection contre les surtensions offrant un très bon niveau de protection.

Un autre objet de l'invention vise à proposer un nouveau dispositif de protection contre les surtensions dont la conception est particulièrement simple.

Un autre objet de l'invention vise à proposer un nouveau dispositif de protection contre les surtensions, ne nécessitant, pour sa mise en oeuvre, que des composants électriques standards.

Un autre objet de l'invention vise à proposer un nouveau dispositif de protection contre les surtensions ne nécessitant qu'un nombre limité de composants pour sa mise en oeuvre.

Un autre objet de l'invention vise à proposer un nouveau dispositif de protection contre les surtensions présentant un volume réduit.

Un autre objet de l'invention vise à proposer un nouveau dispositif de protection contre les surtensions dont le fonctionnement soit parfaitement maîtrisé.

Un autre objet de l'invention vise à proposer un nouveau dispositif de protection contre les surtensions présentant une sécurité de fonctionnement accrue.

Un autre objet de l'invention vise à proposer un nouveau dispositif de protection contre les surtensions dont le fonctionnent est optimisé et s'adapte en fonction de l'intensité du courant de foudre à écouler.

Les objets assignés à l'invention sont atteints à l'aide d'un dispositif de protection d'une installation électrique contre les surtensions, notamment les surtensions transitoires dues à un impact de foudre, ledit dispositif étant monté en dérivation par rapport à l'installation électrique à protéger et pourvu d'un circuit électrique comprenant :
- au moins une première branche, comprenant un premier éclateur,
- au moins une deuxième branche, montée en parallèle avec ladite première branche et comprenant un deuxième éclateur, comportant au moins deux électrodes principales,
- des moyens de couplage de la première branche avec la deuxième branche,
caractérisé en ce que le deuxième éclateur comporte un organe de pré-déclenchement, et en ce que les moyens de couplage sont connectés à l'organe de pré-déclenchement et adaptés pour asservir le déclenchement du deuxième éclateur au déclenchement du premier éclateur de telle sorte que le courant de foudre s'écoule simultanément dans les branches.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre un schéma électrique de principe du dispositif de protection contre les surtensions conforme à l'invention, raccordé électriquement à une installation électrique.
- La figure 2 illustre un schéma électrique détaillé d'un premier mode de réalisation du dispositif de protection contre les surtensions conforme à l'invention, raccordé à une installation électrique.
- La figure 3 illustre un schéma électrique détaillé d'une variante de réalisation d'un dispositif de protection contre les surtensions conforme à l'invention, raccordé à une installation électrique.
- La figure 4 illustre un schéma électrique détaillé d'une autre variante de réalisation d'un dispositif de protection contre les surtensions conforme à l'invention, raccordé à une installation électrique.

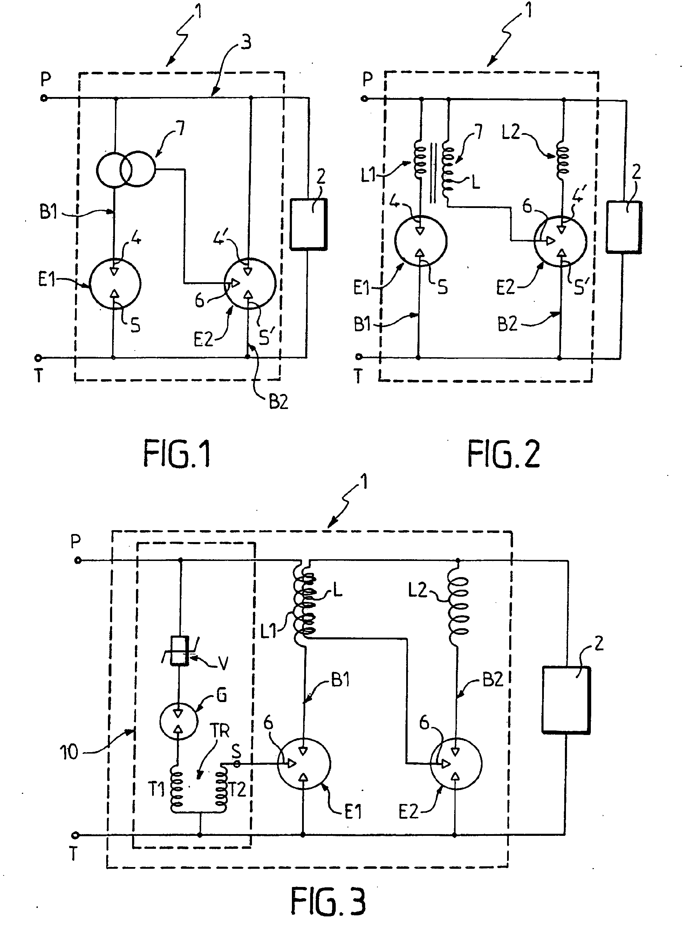

La figure 1 illustre un dispositif de protection 1 contre les surtensions conforme à l'invention, destiné à être branché en dérivation sur l'équipement ou l'installation électrique 2 à protéger.

L'expression « *installation électrique* » fait référence à tout type d'appareil ou réseau susceptible de subir des perturbations de tension, notamment des surtensions transitoires dues à un impact de foudre.

Le dispositif de protection 1 contre les surtensions est avantageusement destiné à être disposé entre une phase P de l'installation à protéger et la terre T.

Il est par ailleurs envisageable, sans pour autant sortir du cadre de l'invention, que le dispositif de protection 1, au lieu d'être branché en dérivation entre une phase P et la terre T, soit branché entre le neutre et la terre, entre la phase P et le neutre ou encore entre deux phases (cas d'une protection différentielle).

Pour des besoins purement illustratifs et descriptifs, nous considérerons dans la suite de la description que le dispositif de protection 1 est raccordé entre la phase P à protéger et la terre T.

Le dispositif de protection 1, du genre parafoudre à éclateur, comporte, selon l'invention, un circuit électrique 3 avantageusement monté en dérivation avec l'installation électrique 2 à protéger.

Selon une caractéristique essentielle de l'invention, le circuit électrique 3 comprend au moins une première branche B1, avantageusement montée en dérivation par rapport à l'installation électrique 2, et comprenant un premier éclateur E1 pourvu de deux électrodes principales 4, 5 séparées par un milieu diélectrique. Selon l'invention, le circuit électrique 3 comprend également au moins une deuxième branche B2, montée en parallèle avec la première branche B1 et comprenant un deuxième éclateur E2 muni de deux électrodes principales 4', 5'.

Selon une autre caractéristique essentielle de l'invention, le deuxième éclateur E2 comporte également un organe de pré-déclenchement 6, préférentiellement formé par une électrode de pré-déclenchement destinée à assurer un amorçage anticipé du deuxième éclateur E2.

Le circuit électrique 3 comporte également, selon l'invention, des moyens de couplage 7 de la première branche B1 avec la deuxième branche B2. Les moyens de couplage 7 sont connectés à l'organe de pré-déclenchement 6 en vue de provoquer l'amorçage du deuxième éclateur E2 et sont également adaptés pour asservir le déclenchement du deuxième éclateur E2 au déclenchement du premier éclateur E1, de telle sorte que le courant de foudre s'écoule simultanément dans les branches B1, B2. Ainsi, les moyens de couplage 7 sont agencés de telle manière que lorsque le premier éclateur E1 est amorcé, autorisant alors le passage d'un courant dans la première branche B1, les moyens de couplage 7 assurent un transfert d'énergie entre la première branche B1 et la deuxième branche B2, de nature à commander l'amorçage du second éclateur E2.

Le terme *« couplage »* fait donc référence à la faculté de lier le comportement électrique de la deuxième branche B2 à celui de la première branche B1 par un transfert d'énergie entre ces deux branches.

Selon un premier mode de réalisation de l'invention illustré sur la figure 2, le premier éclateur E1 est avantageusement monté en série avec une première bobine d'induction L1 et le deuxième éclateur E2 est monté en série avec une deuxième bobine d'induction L2.

Selon ce mode de réalisation de l'invention, les moyens de couplage 7 sont avantageusement conçus pour assurer un couplage magnétique (ou inductif) entre la première branche B1 et la deuxième branche B2. La première branche B1 est ainsi constituée par le premier éclateur E1 et la première bobine d'induction L1 montés en série. La deuxième branche B2 est quant à elle constituée par le deuxième éclateur E2 et par la deuxième bobine d'induction L2 montés en série. Les première et deuxième branches B1, B2 sont avantageusement raccordées entre la phase P à protéger et la terre T de manière à être montées en dérivation par rapport à l'installation électrique 2 à protéger.

De façon particulièrement avantageuse, les moyens de couplage 7 sont formés par une troisième bobine d'induction L couplée magnétiquement avec la première bobine d'induction L1 et connectée à l'organe de pré-déclenchement 6 de manière à générer une tension suffisante entre l'organe de pré-déclenchement 6 et l'une des électrodes principales 4', 5' du deuxième éclateur E2 afin d'assurer l'amorçage de ce dernier. La troisième bobine d'induction L est ainsi raccordée entre la phase P à protéger et l'organe de pré-déclenchement 6, de telle sorte que la tension à ses bornes se retrouve sensiblement entre l'organe de pré-déclenchement 6 et l'une des électrodes principales 4'.

De façon préférentielle, la troisième bobine d'induction L comporte un nombre de spires sensiblement supérieur au nombre de spires de la première bobine d'induction L1 à laquelle elle est couplée, de telle manière que la tension aux bornes de la troisième bobine d'induction L soit sensiblement supérieure à la tension aux bornes de la première bobine d'induction L1.

Les première et troisième bobines d'induction L1, L peuvent ainsi être couplées magnétiquement à la manière d'un transformateur présentant un rapport de transformation donné.

Selon une variante préférentielle de l'invention illustrée sur la figure 3, l'enroulement de la troisième bobine d'induction L est préférentiellement disposé à l'intérieur de l'enroulement de la première bobine d'induction L1. Selon cette variante, les première et troisième bobines d'induction L1, L forment ainsi une bobine à double enroulements, à savoir un enroulement interne et un enroulement externe.

De façon préférentielle, les première et deuxième bobines d'induction L1, L2 sont sensiblement identiques, c'est-à-dire qu'elles présentent sensiblement la même inductance.

Selon une caractéristique particulièrement avantageuse de l'invention, le dispositif de protection 1 est conçu pour empêcher le déclenchement aléatoire de l'un ou l'autre des premier et deuxième éclateurs E1, E2, de telle sorte que le premier éclateur E1 se déclenche systématiquement en premier.

A cet effet, selon une première variante de réalisation du dispositif de protection 1, le premier éclateur E1 présente, intrinsèquement, une tension d'amorçage plus faible que celle du deuxième éclateur E2, de telle sorte que le premier éclateur E1 se déclenche avant le deuxième éclateur E2. Le dispositif de protection 1 fonctionnant suivant ce principe est illustré à la figure 2.

Les moyens permettant d'abaisser la tension d'amorçage d'un éclateur sont bien connus de l'homme du métier et ne feront donc pas l'objet d'une description détaillée.

Selon une autre variante préférentielle de réalisation de l'invention, le dispositif de protection 1 comporte un circuit de pré-déclenchement 10. Selon cette variante, le premier éclateur E1 est muni d'un organe de pré-déclenchement 6, du type électrode de pré-déclenchement, qui est avantageusement raccordé électriquement à la sortie S du circuit de pré-déclenchement 10. Ce circuit de pré-déclenchement 10 est avantageusement sensible aux surtensions, de telle sorte que lorsqu'une surtension se produit, il puisse la détecter et commander l'amorçage du premier éclateur E1.

Le circuit de pré-déclenchement 10 est avantageusement monté en dérivation par rapport à l'installation électrique 2, par exemple entre la phase P à protéger et la terre T, et peut être de tout type connu de l'homme du métier. Le circuit de pré-déclenchement 10 pourra ainsi comporter un transformateur TR, avec une bobine primaire T1 et une bobine secondaire T2 raccordée à l'organe de pré-déclenchement 6, ainsi qu'un éclateur G monté en série avec la bobine primaire T1. Le circuit de pré-déclenchement 10 pourra également comporter, montée en série avec l'éclateur G, une varistance V pourvue d'un moyen de déconnexion thermique et destinée à assurer la coupure du courant de suite écoulé par l'éclateur G. Le moyen de déconnexion thermique, sensible à l'état de la varistance, est adapté pour déconnecter la varistance en fin de vie.

Grâce à ce montage, lorsqu'une surtension se produit, le premier éclateur E1 se déclenche en premier, par le biais du circuit de pré-déclenchement 10 et l'amorçage du premier éclateur E1 entraîne, de façon quasi-instantanée, le déclenchement du deuxième éclateur E2 monté en parallèle. Le courant de foudre s'écoule alors simultanément dans les deux branches B1, B2 du dispositif de protection 1, améliorant ainsi d'une part la capacité d'écoulement du courant de foudre et d'autre part la capacité de coupure du courant de suite du dispositif de protection 1.

A titre d'exemple illustratif et non limitatif, le premier éclateur E1 et son circuit de pré-déclenchement 10 pourront être conçus de telle sorte que la tension d'amorçage du premier éclateur E1 soit de l'ordre de 2 kV à 2,5 kV, le deuxième éclateur E2 ayant une tension d'amorçage intrinsèque de l'ordre de 4 kV.

La première et la troisième bobines d'induction L1, L, d'inductance égale à environ 0,2 µH, constituent préférentiellement un transformateur à air avec un rapport de transformation de l'ordre de 20.

Selon cette configuration, lorsque le premier éclateur E1 est traversé, après son amorçage, par un courant de foudre de l'ordre de 20 kA, la tension entre l'organe de pré-déclenchement 6 et l'électrode principale 4' du deuxième éclateur E2 est d'environ 6 kV, soit une valeur suffisante pour provoquer l'amorçage du deuxième éclateur E2.

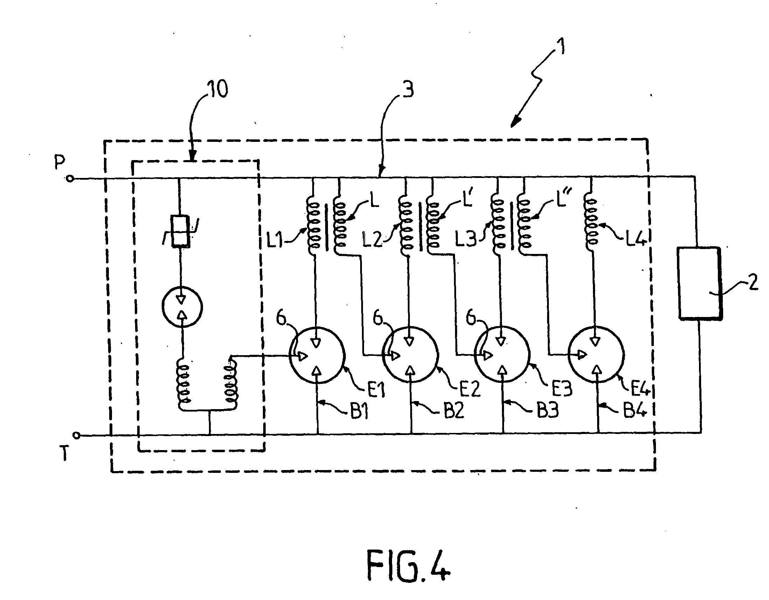

Afin d'améliorer encore davantage la capacité d'écoulement du courant de foudre du dispositif, on peut mettre en parallèle plus de deux éclateurs principaux, tel que cela est illustré sur la figure 4.

Selon cette variante de réalisation de l'invention, le circuit électrique 3 comporte avantageusement une branche principale B1 comprenant un éclateur principal E1 et une bobine d'induction principale L1, montés en série entre la phase P à protéger et la terre T. De façon préférentielle, la branche principale B1 est exclusivement constituée de l'éclateur principal E1 et de la bobine d'induction principale L1

Tel que cela est illustré sur la figure 4, le circuit électrique 3 comporte également une pluralité de branches intermédiaires B2, B3, montées en parallèle avec la branche principale B1 et comportant ou étant chacune constituée exclusivement par un éclateur intermédiaire E2, E3 et une bobine d'induction intermédiaire L2, L3 montés en série entre la phase P à protéger et la terre T. Le circuit électrique 3 comporte enfin une branche terminale B4, montée en parallèle avec la branche principale B1 et avec les branches intermédiaires B2, B3 et comportant ou étant exclusivement constituée par un éclateur terminal E4 et une bobine d'induction terminale L4 montés en série entre la phase P à protéger et la terre T. L'ensemble des branches B1, B2, B3, B4 sont avantageusement montées en dérivation par rapport à l'installation électrique 2 à protéger, de telle sorte que le courant de foudre se répartisse de façon sensiblement équitable entre chacune des branches. A cet effet, les bobines d'induction principale L1, intermédiaires L2, L3 et terminale L4 sont sensiblement identiques, c'est-à-dire qu'elles présentent sensiblement la même inductance.

De façon préférentielle, l'éclateur principal E1 est pré-déclenché à l'aide du circuit de pré-déclenchement 10. Selon une caractéristique particulièrement avantageuse, le circuit électrique 3 comporte également une pluralité de bobines d'induction secondaires L, L', L". Chacune desdites bobines d'induction secondaires L, L', L" est couplée magnétiquement avec une bobine d'induction principale L1 ou intermédiaire L2, L3. Les éclateurs intermédiaires E2, E3 et l'éclateur terminal E4 sont avantageusement pourvus d'un organe de pré-déclenchement 6 raccordé avec les bobines d'induction secondaires L, L', L" correspondantes de manière à assurer le déclenchement desdits éclateurs intermédiaires E2, E3 et terminal E4 sous la dépendance de l'amorçage de l'éclateur principal E1. Plus précisément, le dispositif de protection 1 est conçu de telle manière que le déclenchement de l'éclateur intermédiaire E2 soit subordonné au déclenchement de l'éclateur principal E1, le déclenchement de l'éclateur intermédiaire E3 étant lui même subordonné au déclenchement de l'éclateur intermédiaire E2 et le déclenchement de l'éclateur terminal E4 étant subordonné au déclenchement de l'éclateur intermédiaire E3.

Afin d'optimiser le déclenchement du dispositif de protection 1, et en particulier d'éviter que tous les éclateurs E1, E2, E3, E4 se déclenchent systématiquement quelle que soit l'intensité du courant de foudre à écouler, les bobines d'induction principale L1, intermédiaires L2, L3, terminale L4 et secondaires L, L', L" sont avantageusement dimensionnées de telle façon que pour une valeur prédéterminée du courant de foudre, seul un nombre prédéterminé d'éclateurs E1, E2, E3, E4 soit déclenché.

Ainsi, les bobines d'induction L1, L2 étant sensiblement identiques, les deux branches B1, B2 ont sensiblement la même impédance, de telle sorte que le courant de foudre se répartit de façon équivalente entre les branches B1, B2 et s'écoule, pour une première moitié, dans la première branche B1 et, pour une seconde moitié, dans la deuxième branche B2. De cette façon, la capacité d'écoulement du courant de foudre des éclateurs E1 et E2 montés en parallèle correspond sensiblement au double de la capacité d'écoulement du premier éclateur E1 ou du deuxième éclateur E2 pris individuellement.

Le fonctionnement du dispositif de protection conforme à l'invention va maintenant être décrit en se référant aux figures 1 à 4.

Lorsqu'une surtension se produit, d'intensité suffisante pour induire, aux bornes du premier éclateur E1, une tension supérieure à sa valeur de pré-déclenchement, le premier éclateur E1 s'amorce, autorisant ainsi le passage du courant de foudre dans la première branche B1 et son écoulement vers la terre T.

Le courant circulant dans la première bobine d'induction L1 génère alors, par induction magnétique, une tension aux bornes de la troisième bobine d'induction L. Cette tension se répercute ensuite entre l'organe de pré-déclenchement 6 et l'une des électrodes principales 4' du deuxième éclateur E2, provoquant l'amorçage du deuxième éclateur E2 quasiment instantanément après le déclenchement du premier éclateur E1. Le courant de foudre s'écoule alors simultanément dans les deux branches B1, B2 montées en parallèle, ce qui permet d'améliorer sensiblement la capacité d'écoulement du courant de foudre du dispositif de protection 1 conforme à l'invention.

Dans le cas de la variante de réalisation illustrée sur la figure 4, l'arrivée du courant de foudre a pour effet de déclencher l'éclateur principal E1, par exemple grâce au circuit de pré-déclenchement 10. L'éclateur principal E1 s'amorce donc en premier après l'impact de foudre. Le courant de foudre circule alors dans la branche principale B1, créant ainsi une tension aux bornes de la bobine d'induction principale L1. Une tension d'amplitude supérieure est ensuite générée aux bornes de la bobine d'induction secondaire L, couplée magnétiquement avec la bobine d'induction principale L1, et le deuxième éclateur E2 s'amorce, grâce au dimensionnement adéquat des bobines d'inductance principale L1 et secondaire L. A partir de cet instant, le courant de foudre est réparti entre les deux branches principale et intermédiaire B1, B2 et s'écoule simultanément à travers l'éclateur principal E1 et l'éclateur intermédiaire E2.

L'intensité du courant circulant dans la branche intermédiaire B2 peut alors être suffisante ou insuffisante pour assurer l'amorçage des éclateurs suivants, à savoir l'éclateur intermédiaire E3 et l'éclateur terminal E4. Ainsi, l'ensemble des bobines d'induction 1 sont avantageusement dimensionnées de telle manière que plus l'intensité du courant de foudre est élevée et plus le nombre d'éclateurs E1, E2, E3, E4 déclenchés en parallèle est important.

La présente invention permet donc d'optimiser et d'adapter le fonctionnement du dispositif de protection 1 à l'intensité du courant de foudre à écouler. Ceci présente notamment l'avantage d'économiser certaines parties du dispositif en évitant d'utiliser systématiquement tous les composants du circuit électrique 3.

## Revendications

1. Dispositif de protection d'une installation électrique (2) contre les surtensions, notamment les surtensions transitoires dues à un impact de foudre, ledit dispositif étant monté en dérivation par rapport à l'installation électrique (2) à protéger et pourvu d'un circuit électrique (3) comprenant :
- au moins une première branche (B1), comprenant un premier éclateur (E1),
- au moins une deuxième branche (B2), montée en parallèle avec ladite première branche (B1) et comprenant un deuxième éclateur (E2), comportant au moins deux électrodes principales (4', 5'),
- des moyens de couplage (7) de la première branche (B1) avec la deuxième branche (B2),
**caractérisé en ce que** le deuxième éclateur (E2) comporte un organe de pré-déclenchement (6), et **en ce que** les moyens de couplage (7) sont connectés à l'organe de pré-déclenchement (6) et adaptés pour asservir le déclenchement du deuxième éclateur (E2) au déclenchement du premier éclateur (E1) de telle sorte que le courant de foudre s'écoule simultanément dans les branches (B1, B2).

2. Dispositif selon la revendication 1 **caractérisé en ce que** le premier éclateur (E1) est monté en série avec une première bobine d'induction (L1), le deuxième éclateur (E2) est monté en série avec une deuxième bobine d'induction (L2) et les moyens de couplage (7) sont conçus pour assurer un couplage magnétique entre la première branche (B1) et la deuxième branche (B2).

3. Dispositif selon la revendication 2 **caractérisé en ce que** les moyens de couplage (7) sont formés par une troisième bobine d'induction (L), couplée magnétiquement avec la première bobine d'induction (L1) et connectée à l'organe de pré-déclenchement (6) de manière à générer une tension suffisante entre l'organe de pré-déclenchement (6) et l'une des électrodes principales (4', 5') du deuxième éclateur (E2) pour assurer l'amorçage de ce dernier.

4. Dispositif selon la revendication 3 **caractérisé en ce que** l'enroulement de la troisième bobine d'induction (L) est disposé à l'intérieur de l'enroulement de la première bobine d'induction (L1), lesdites première et troisième bobines d'induction (L1, L) formant ainsi une bobine à double enroulements.

5. Dispositif selon l'une des revendications 1 à 4 **caractérisé en ce que** les première et deuxième bobines d'induction (L1, L2) sont sensiblement identiques.

6. Dispositif selon l'une des revendications 1 à 5 **caractérisé en ce que** le premier éclateur (E1) présente, intrinsèquement, une tension d'amorçage plus faible que celle du deuxième éclateur (E2), de telle sorte que le premier éclateur (E1) se déclenche avant le deuxième éclateur (E2).

7. Dispositif selon l'une des revendications 1 à 5 **caractérisé en ce que** le premier éclateur (E1) comporte un organe de pré-déclenchement (6), et **en ce que** le dispositif comporte un circuit de pré-déclenchement (10), connecté audit organe de pré-déclenchement (6) de manière à assurer l'amorçage du premier éclateur (E1).

8. Dispositif selon l'une des revendications précédentes **caractérisé en ce que** le circuit électrique (3) comporte :
- une branche principale (B1), comportant un éclateur principal (E1) et une bobine d'induction principale (L1),
- une pluralité de branches intermédiaires (B2, B3) montées en parallèle avec la branche principale (B1) et comportant chacune un éclateur intermédiaire (E2, E3) et une bobine d'induction intermédiaire (L2, L3),
- une branche terminale (B4), montée en parallèle avec la branche principale (B1) et comportant un éclateur terminal (E4) et une bobine d'induction terminale (L4),
- une pluralité de bobines d'induction secondaires (L, L', L") respectivement couplées magnétiquement avec les bobines d'induction principale et intermédiaires (L1, L2, L3),
lesdites bobines d'induction (L1, L2, L3, L4, L, L', L") étant dimensionnées de telle façon que pour une valeur pré-déterminée du courant de foudre, seul un nombre pré-déterminé d'éclateurs (E1, E2, E3, E4) soient déclenchés.

## Patentansprüche

1. Vorrichtung zum Schutz einer elektrischen Anlage (2) vor Überspannungen, insbesondere vor transienten Überspannungen aufgrund eines Blitzeinschlags, wobei die Vorrichtung im Nebenschluss zur zu schützenden elektrischen Anlage (2) geschaltet ist und mit einem elektrischen Stromkreis (3) versehen ist, der Folgendes umfasst:
- mindestens einen ersten Zweig (B1), der eine erste Funkenstrecke (E1) umfasst,
- mindestens einen zweiten Zweig (B2), der parallel mit dem ersten Zweig (B1) geschaltet ist und eine zweite Funkenstrecke (E2) umfasst, die mindestens zwei Hauptelektroden (4', 5') umfasst,
- Mittel zur Kopplung (7) des ersten Zweigs (B1) mit dem zweiten Zweig (B2),
**dadurch gekennzeichnet, dass** die zweite Funkenstrecke (E2) ein Vorauslöseorgan (6) umfasst, und dadurch, dass die Kopplungsmittel (7) mit dem Vorauslöseorgan (6) verbunden sind und angepasst sind, um die Auslösung der zweiten Funkenstrecke (E2) bei der Auslösung der ersten Funkenstrecke (E1) nachzuführen, derart, dass der Blitzstrom gleichzeitig in den Zweigen (B1, B2) abfließt.

2. Vorrichtung nach Anspruch 1, **dadurch gekennzeichnet, dass** die erste Funkenstrecke (E1) mit einer ersten Induktionsspule (L1) in Reihe geschaltet ist, die zweite Funkenstrecke (E2) mit einer zweiten Induktionsspule (L2) in Reihe geschaltet ist und die Kopplungsmittel (7) gestaltet sind, um eine magnetische Kopplung zwischen dem ersten Zweig (B1) und dem zweiten Zweig (B2) zu gewährleisten.

3. Vorrichtung nach Anspruch 2, **dadurch gekennzeichnet, dass** die Kopplungsmittel (7) für eine dritte Induktionsspule (L) gebildet sind, die magnetisch mit der ersten Induktionsspule (L1) gekoppelt ist und mit dem Vorauslöseorgan (6) verbunden ist, derart, dass eine ausreichende Spannung zwischen dem Vorauslöseorgan (6) und einer der Hauptelektroden (4', 5') der zweiten Funkenstrecke (E2) erzeugt wird, um den Überschlag dieser letzteren zu gewährleisten.

4. Vorrichtung nach Anspruch 3, **dadurch gekennzeichnet, dass** die Wicklung der dritten Induktionsspule (L) im Inneren der Wicklung der ersten Induktionsspule (L1) angeordnet ist, wobei die erste und die dritte Induktionsspule (L1, L) so eine Spule mit doppelten Wicklungen bilden.

5. Vorrichtung nach einem der Ansprüche 1 bis 4, **dadurch gekennzeichnet, dass** die erste und die zweite Induktionsspule (L1, L2) im Wesentlichen identisch sind.

6. Vorrichtung nach einem der Ansprüche 1 bis 5, **dadurch gekennzeichnet, dass** die erste Funkenstrecke (E1) intrinsisch eine Überschlagsspannung aufweist, die niedriger als diejenige der zweiten Funkenstrecke (E2) ist, derart, dass die erste Funkenstrecke (E1) vor der zweiten Funkenstrecke (E2) ausgelöst wird.

7. Vorrichtung nach einem der Ansprüche 1 bis 5, **dadurch gekennzeichnet, dass** die erste Funkenstrecke (E1) ein Vorauslöseorgan (6) umfasst, und dadurch, dass die Vorrichtung einen Vorauslösekreis (10) umfasst, der derart mit dem Vorauslöseorgan (6) verbunden ist, dass der Überschlag der ersten Funkenstrecke (E1) gewährleistet wird.

8. Vorrichtung nach einem der vorhergehenden Ansprüche, **dadurch gekennzeichnet, dass** der elektrische Stromkreis (3) Folgendes umfasst:
- einen Hauptzweig (B1), der eine Hauptfunkenstrecke (E1) und eine Hauptinduktionsspule (L1) umfasst,
- mehrere Zwischenzweige (B2, B3), die mit dem Hauptzweig (B1) parallel geschaltet sind und jeweils eine Zwischenfunkenstrecke (E2, E3) und eine Zwischeninduktionsspule (L2, L3) umfassen,
- einen Endzweig (B4), der mit dem Hauptzweig (B1) parallel geschaltet ist und eine Endfunkenstrecke (E4) und eine Endinduktionsspule (L4) umfasst,
- mehrere Sekundärinduktionsspulen (L, L', L"), die magnetisch mit den Haupt- beziehungsweise Zwischeninduktionsspulen (L1, L2, L3) gekoppelt sind,
wobei die Induktionsspulen (L1, L2, L3, L4, L, L', L") derart bemessen sind, dass für einen vorbestimmten Wert des Blitzstroms lediglich eine vorbestimmte Anzahl von Funkenstrecken (E1, E2, E3, E4) ausgelöst wird.

## Claims

1. Apparatus for protecting an electrical installation (2) against overvoltages, in particular transient overvoltages due to lightning strikes, said apparatus being mounted in parallel with respect to the electrical installation (2) to protect the circuit and provided with an electrical circuit (3) comprising:
- at least a first branch (B1), comprising a first spark gap (E1),
- at least a second branch (B2), mounted in parallel with said first branch (B1) and comprising a second spark gap (E2), comprising at least two main electrodes (4', 5'),
- coupling means (7) of the first branch (B1) with the second branch (B2), **characterized in that** the second spark gap (E2) includes a pre-triggering element (6), and **in that** the coupling means (7) are connected to the pre-triggering element (6) and adapted for putting the triggering of the second spark gap (E2) under the control of the first spark gap (E1) so that the lightning current flows simultaneously in the branches (B1, B2).

2. Apparatus according to claim 1 **characterized in that** the first spark gap (E1) is mounted in series with a first inductor (L1), the second spark gap (E2) is connected in series with a second inductor (L2) and the coupling means (7) are designed to provide a magnetic coupling between the first branch (B1) and the second branch (B2).

3. Apparatus according to Claim 2 **characterized in that** the coupling means (7) are formed by a third inductor (L), magnetically coupled with the first inductor (L1) and connected to the pre-triggering element (6) so as to generate a sufficient voltage between the pre-triggering element (6) and one of the main electrodes (4', 5') of the second spark gap (E2) to ensure triggering of the latter.

4. Apparatus according to claim 3 **characterized in that** the winding of the third inductor (L) is disposed inside the winding of the first inductor (L1), said first and third inductors (L1, L) thus forming a double winding coil.

5. Apparatus according to one of claims 1 to 4 **characterized in that** the first and second inductors (L1, L2) are substantially identical.

6. Apparatus according to one of claims 1 to 5 **characterized in that** the first spark gap (E1) has intrinsically a lower breakdown voltage than that of the second spark gap (E2), so that the first spark gap (E1) is triggered before the second spark gap (E2).

7. Apparatus according to one of claims 1 to 5 **characterized in that** the first spark gap (E1) includes a pre-triggering element (6), and **in that** the apparatus comprises a pre-triggering circuit (10), connected to said pre-triggering element (6) so as to ensure start of breakdown of the first spark gap (E1).

8. Apparatus according to one of the preceding claims **characterized in that** the electric circuit (3) comprises:
- a main branch (B1), comprising a main spark gap (E1) and a main inductor (L1),
- a plurality of intermediate branches (B2, B3) connected in parallel with the main branch (B1) and each having an intermediate spark gap (E2, E3) and an intermediate inductor (L2, L3),
- a terminal branch (B4), connected in parallel with the main branch (B1) and having a terminal spark gap (E4) and a terminal inductor (L4),
- a plurality of secondary inductors (L, L', L ") magnetically coupled respectively with the main and intermediate inductors (L1, L2, L3),
said inductors (L1, L2, L3, L4, L, L', L") being dimensioned such that for a predetermined value of the lightning current, only a predetermined number of spark gaps (E1, E2, E3, E4) are triggered.
